# EUROPEAN PATENT SPECIFICATION

(11) **EP 2 452 899 B1**
(45) Date of publication and mention of the grant of the patent: **17.07.2013**
(21) Application number: 11188576.0
(22) Date of filing: 10.11.2011
(51) Int. Cl.: B65G 1/04

(54) **Apparatus for the automated handling of loading units in warehouses equipped with shelf-like structures**
Vorrichtung zum automatischen Handhaben von Ladeeinheiten in Regallagern
Dispositif de manipulation automatique d'unités de chargement dans des magasins à rayonnages

(30) Priority: 11.11.2010 IT FI20100223
(43) Date of publication of application: 16.05.2012
(73) Proprietor: Modul Blok Centro S.r.l., 50010 Campi Bisenzio (IT); Foglia, Gianfranco, 50133 Firenze (IT)
(72) Inventor: Foglia, Gianfranco, 50133 Firenze (IT); Calvelli, Piero, 50136 Firenze (IT)
(74) Representative: Cinquantini, Bruno

(56) References cited:
- WO-A1-2009/118100
- US-A- 6 042 321
- US-A1- 2006 285 947

## Description

### Field of the invention

The present invention relates to the technical field of handling systems of goods, in particular to the technical field of handling systems of goods in warehouses equipped with shelf-like structures.

### State of the art

There are many manual storing solutions used today, and they are quite different from each other. The systems implemented vary according to the storing needs and to the type of materials to be stored.

Various storing systems exist for manually storing goods starting with the "stacking" one and continuing with the conventional structures of the so-called "pallet-holder" type, the "drive-in" type structures, the structures with "moveable bases" and the structures comprising so-called "dynamic-aisle" shelvings.

Each of these types requires some intervention by an operator for the physical handling of the loading units (hereinafter mentioned with the acronym I.u.). The appointed operator mainly uses manual or electric drive lift trucks for such handling and, according to the cases, equipped with front or side fork.

All lift trucks provide handling by forking the material and lifting it and extracting it from or inserting it into the selected shelving for the storing thereof.

The aisle spaces may vary significantly, according to the type of the dolly and the type of the shelving used. For example, in the case of forklifts with front loading, there are corridors typically with dimensions of approximately 2.7-3 m, in the case of forklifts with retractable forks, there are corridors of approximately 2.5 m, in the case of forklifts with side loading/unloading, there are corridors of approximately 1.5 m, in the case of rider order picking dolly with possibility of lifting the operator, there are corridors of approximately 1.2 m.

Today, there are many automated storing solutions and they are quite different from each other. As with manual storing, the systems implemented vary according to the storing needs and to the type of materials to be stored, but also and especially according to the product handling schedule.

Indeed, managing the good storing and warehousing operations provides using systems which may be configured and applied differently each time according to the user's needs or to the problem to be solved.

Most of the automated warehouses used today are based on AS/RS (Automated Storage & Retrieval System) technology, technology which uses translating-lifting systems which handle the I.u. within storage corridors on several levels. Materials are stored on metal structures sized each time according to the materials to be stored. The translating-lifting device runs within the corridor and picks and places the materials, by means of picking devices (forks or satellites), thus transporting the materials towards a loading/unloading mouth which is usually located at the head of the service corridor.

The structures used may range from simple shelving with shelves up to a self-supporting shelving where the structure used also serves as supporting warehouse and hence in addition to serving as storing structure of the goods, it also serves as covering and protective building of the goods themselves.

The types of automated storing normally used by the manufacturers of automated storing systems give rise to the following types of warehouse: single-deep warehouse; double-deep warehouse; multiple-deep warehouse; continuous warehouses.

The single-deep warehouse is characterized in that the translating-lifting device runs within the storing corridor and has direct access to all loading units on both sides thereof. In this type of warehouse, "pallet-holder" type structures are normally implemented and the I.u. are stored by working on the edge of the pallet, which generally has a dimension of 800 mm. This type of warehouse is suitable for users with high number of articles or particular needs for rapid accessibility to the stored product.

The double-deep warehouse is characterized in that the translating-lifting device runs within the storing corridor and has access to all loading units on both sides of the translating-lifting device and in double depth. This results in the need to create some so-called "moving missions" of the I.u. in the warehouse in such a way to be able to access the units stored in the second depth. In this type of warehouse, "pallet-holder" type structures are normally implemented and the I.u. are stored by working on the edge of the pallet, which generally has a dimension of 800 mm. This type of warehouse is suitable for users with high number of articles and variable quantities for all individual articles. It also offers the opportunity of storing material which is stock to the material usually picked.

The multiple-depth warehouse is characterized in that the translating-lifting device runs within the storing corridor and has access to all loading units on both sides of the translating-lifting device and in multiple depth. The device used for this type of handling is a satellite device. Generally, so-called "drive-in" type structures are implemented and the I.u. are stored by working on the edge of the 1200-mm pallet. Given its related complexity, this type of warehouse is suitable for users who do not have a high number of articles and a high number of handling.

All lines in the continuous-type warehouse consist of an automated gravity conveyor. The translating-lifting device feeds the lines and another translating-lift device unloads the I.u. from the opposite side. In this type of warehouse, "pallet-holder" type structures are generally implemented and the I.u. are stored by working on the edge of the pallet, which generally has a dimension of 800 mm. This type of warehouse is suitable for users having a very high number of articles and number of handling which is to respect a strict FIFO (First in/First out) or meet quick accumulation needs.

Variants exist of the types briefly described above, for example several picking forks may be applied on a translating-lifting device or a translating-lifting device may be used to handle several satellites within the same corridor or again, a translating-lifting device may be used on several corridors by means of using a specific so-called "bogie" device, etc.

In any event, the common feature we find on all individual systems is the one of using a translating-lifting device called to operate on specific tracks applied both on the ground and at the top of the structures, structures which also serve as reference and support for the translating-lifting device itself. Said translating-lifting device is adapted to move within the dedicated corridors and necessarily needs to have the same height of the warehouse to be served. Hence, the structure thereof is to be calculated on the basis of the loads and on the speeds it is to obtain for the provided slaving. Therefore in brief, the height of the translating-lifting device is to be sized according to the warehouse to be served and its self-supporting structure is to be made according to the dimensions and to the number of I.u. to be handled.

In addition to the manual storing systems described, semi-automated systems exist for managing the loading and the unloading of the I.u. stored in the warehouse. These systems are essentially adapted to facilitate the manual work of the warehouse operators and usually make use of a specific device called "satellite". The use of this satellite is particularly suitable for the "drive-in" type of storing structures. Said satellites comprise a self-powered shuttle which is located, by means of a lift truck, within the storing corridor. The satellite is adapted to handle the I.u. within the individual corridor thus avoiding the use of the lift truck - which would otherwise require emptying the corridors below as occurs in a normal "drive-in" type of storing - thus all the existing lines in the warehouse becoming individually available for the picking or for the loading.

An example of a state-of-the-art system is described in US patent number 6,042,321, which discloses an apparatus according to the preamble of claim 1 and wherein an automated storage system for receiving, storing and returning dairy cases stored without pallets is described. Specifically, the automated storage system comprises an article transporter which includes a shuttle that deposits and retrieves dairy cases stored in storage lanes ol a storage rack and a rail system for supporting the shuttle and dairy cases stored thereon. One or more shuttles may be used in the automated storage and retrieval system and are coupled via a shuttle bridge.

Therefore, the state of the art requires, in each of the described cases, that the warehouse shelvings are also sized according to some systems and the handling devices of the I.u. which will be employed. This involves, as an immediate consequence which is quite difficult and costly (when it is not impossible), adapting an existing warehouse to the changed needs of number, dimensions and type of handling of the I.u. Generally, there is a need to re-size the entire warehouse structure to allow different handling systems to be used from the ones whereby the warehouse was initially designed and sized.

Thus, one of objects of the present invention depicts the introduction of a new handling apparatus of the I.u. of a warehouse adapted to take advantage of the shelvings, also pre-existing, of the warehouse at hand for the support required for its own movement and for the movement of the I.u.

Therefore the present invention proposes an apparatus as defined in claim 1.

### Brief description of the figures

Fig. 1 shows a first view of a warehouse shelving equipped with the apparatus according to the present invention.
Fig. 2 shows a second view of a warehouse shelving equipped with the apparatus according to the present invention.
Fig. 3 shows a third view of a warehouse shelving equipped with the apparatus according to the present invention.
Fig. 4 shows a fourth view of a warehouse shelving equipped with the apparatus according to the present invention.
Fig. 5 shows a fifth view of a warehouse shelving equipped with the apparatus according to the present invention.
Fig. 6 shows in detail, the tracks and the guide equipment on which the apparatus according to the present invention moves, which are associated with the uprights of a warehouse shelving equipped with the apparatus according to the present invention.
Fig. 7 shows an embodiment of the first semi-movable device according to the present invention.
Fig. 8 shows an embodiment of the second semi-movable device according to the present invention.
Fig. 9 shows an embodiment of the third semi-movable device according to the present invention.

### Detailed description of the invention

The apparatus object of the present invention takes advantage of the warehouse shelvings, which are indispensable for all types of storing of the goods, as a support for the handling thereof. The present invention is compatible with all types of pre-existing shelving, thus in certain cases, retrofitting becomes possible of manual warehouses already in operation.

On the basis of the devices with which it is equipped, the apparatus according to the present invention may work in single, double or multiple depth, may, by working in a fleet and using several primary or secondary devices, also serve warehouse spaces, heights and depths of various dimension and type.

The apparatus according to the present invention comprises a first semi-movable device (hereinafter indicated as "shuttle" device) 10 adapted to horizontally translate on straight tracks and comprising a second semi-movable device (hereinafter indicated as "transport" device) 11 adapted to vertically translate on straight tracks and in turn comprising a picking device 12 adapted to lift and handle load units 13 of various type and dimension. Said picking device may be of known type and available on the market or built specifically, and may comprise, for example, single- and double-depth telescopic forks, satellites with working edge of various measures, cam picking devices, etc.

According to the present invention, said shuttle device 10 runs on the ground on a specific track 16, in front of the warehouse shelvings containing said I.u., and is adapted, during the regular operating cycle, to stop in position at the column of the shelving to be served. At this point said transport device 11 separates from said shuttle device 10 and starts ascending on the structures of the shelving until arriving at the level wanted in which it is to pick or place said I.u.

In a preferred embodiment of the present invention, said transport device 11 comprises a picking device 12 of so-called "satellite" type. Said satellite 12 is in turn adapted to detach from said transport device 11 and to enter in the shelvings until reaching the pre-determined work position so as to pick or unload the predetermined I.u.

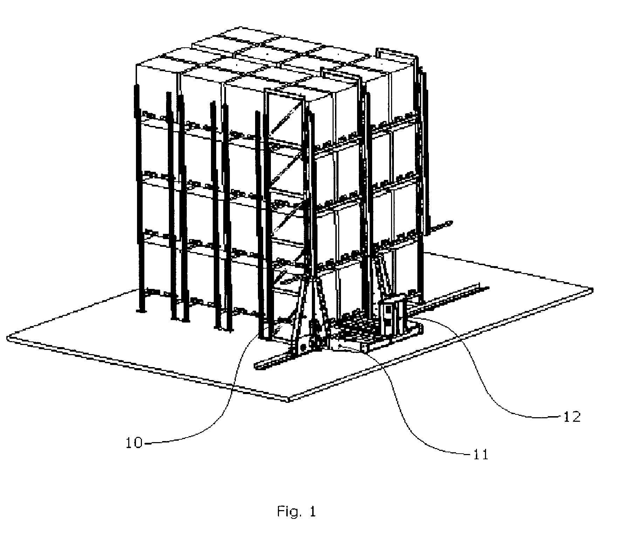

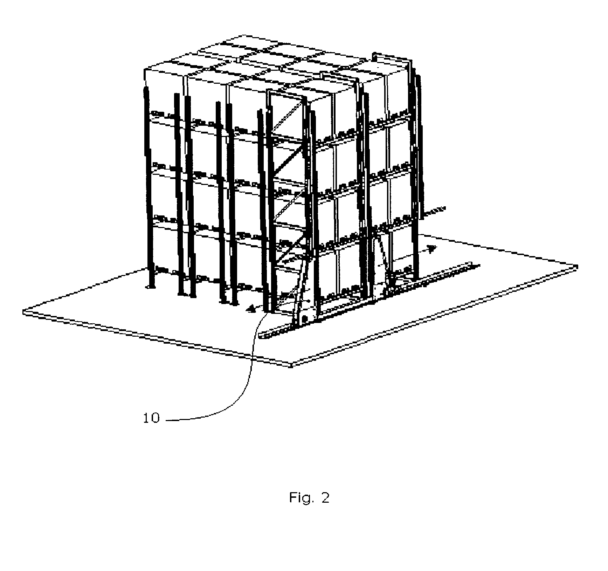

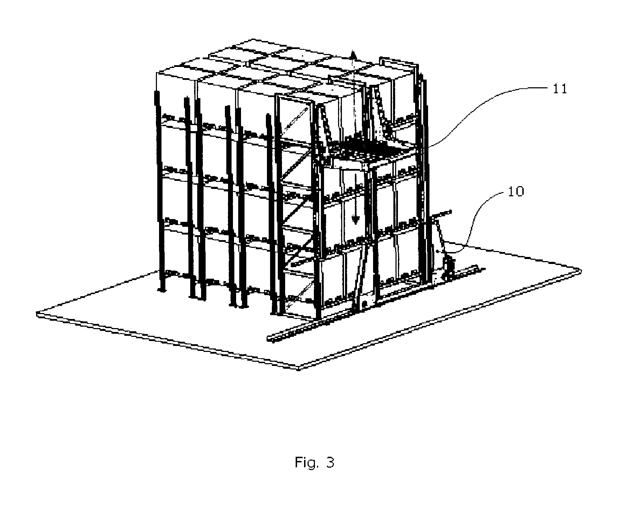

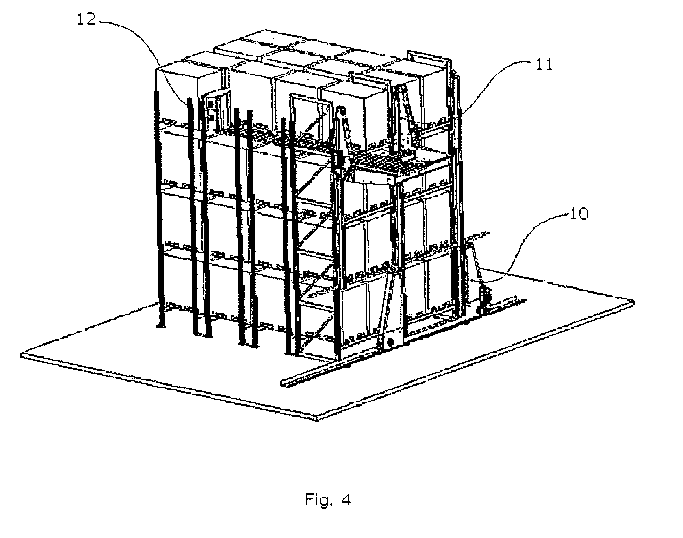

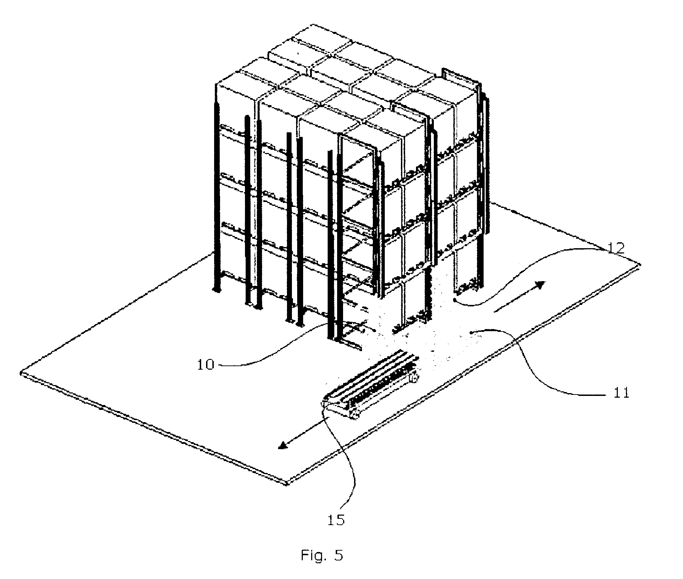

Accompanying figures 1-5 show the case in which the shelving is of the so-called "drive-in" type. After entering in the shelving, said satellite 12 provides to pick or place the I.u. and then to return on board the transport device 11, which in the meantime stayed stopped in its position awaiting the return of said satellite 12.

At this point, said transport device 11 is activated again and descends to return to said shuttle device 10, which may translate again in the service corridor and transfer the picked material to a station dedicated to such a purpose, or move to return to a new work column.

The apparatus according to the present invention is modular; indeed, out of need for more burdensome work cycles, the warehouse may be equipped, when needed, with a plurality of said shuttle devices 10, each comprising a transport device 11, or with only one of said shuttle devices 10 comprising and adapted to control a plurality of said transport devices 11.

The apparatus object of the present invention may further comprise a third semi-movable device 15 adapted to perform the transport of the I.u. from said shuttle 10 towards various warehouse locations, or vice versa.

In greater detail, said shuttle device 10, which is dedicated to horizontally moving the apparatus according to the present invention, is preferably adapted to run on a dedicated track connected to the foot of the warehouse shelvings. Said shuttle 10 comprises a suitable seat for at least one transport device 11 in addition to the connecting switchboards, the feed devices and the control devices for the positioning thereof and for the driving of said transport device 11.

Said transport device 11 in turn preferably comprises a gear mechanism which makes it adapted to ascend on the structures and on the warehouse shelvings. Said structures/shelvings may be equipped with a guide mechanism which serves to drive said transport device 11 during the work cycle thereof. Said guide mechanisms are such to be able to be applied, with small and simple contrivances, on all types of existing shelving and are sized to support the load of the transport device 11 with the picking device thereof, consisting of for example, said satellite device 12. Said transport device 11 is free to ascend on the warehouse structures once detached from said shuttle 10, and in turn leaves said shuttle 10 free to horizontally move on the work axis thereof to be able to serve a second or a third transport device 11.

In essence, said shuttle 10 acts so as to accommodate and transfer said transport device 11 in the various storing columns of the structures in the warehouse.

Said transport device 11 also comprises the housing of said satellite 12 which is capable of giving the satellite itself a certain number of work paths, preferably 4 or 6, for managing the locations of the I.u. which may be on various levels, both to the right and to the left with respect to the longitudinal sliding of said shuttle 10. Further work paths, preferably 2, arranged at ground level, serve to manage loading and unloading in the interface steps with the other system devices and are located in the same longitudinal sliding direction of shuttle 10.

Similarly to that disclosed about the interaction between said shuttle 10 and said transport device 11, when said transport device 11 arrives at the service level wanted, said satellite 12 is transferred onto the conveniently equipped shelvings and picks or places the I.u. involved. The transport device 11 awaits the satellite device until the return thereof and then ascends and descends the structure up/down to the position wanted.

In one of its preferred embodiments, the apparatus according to the present invention also comprises a third semi-movable device 15 which uses the same sliding corridor which is used by said shuttle 10 and is adapted to transfer the I.u. from shuttle 10 to the materials unloading station or from the loading station of shuttle 10.

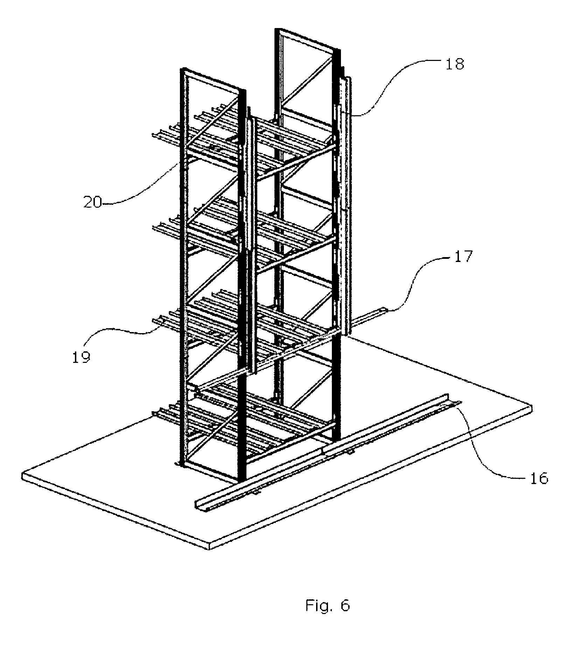

In reference to accompanying fig. 6, the apparatus according to the present invention also comprises guiding equipment adapted to be installed on the warehouse structures allocated to storing the goods and to interfacing with said apparatus so as to allow it to interact with said warehouse structures to reach the position of the I.u. to be handled.

Said equipment preferably comprises: at least one bottom guide 16 and at least one top guide 17, adapted to interface with said shuttle 10; at least one reference guide 18 adapted to allow said transport device 11 to ascend on the shelving, said reference guide 18 preferably comprising a hooking rack; at least one sliding guide 19 adapted to interface with said satellite device 12. Said guides 16, 17, 18, 19 being further adapted to be easily fixed to the uprights of pre-existing warehouse shelving by means, for example, of universal hooking bracketing 20.

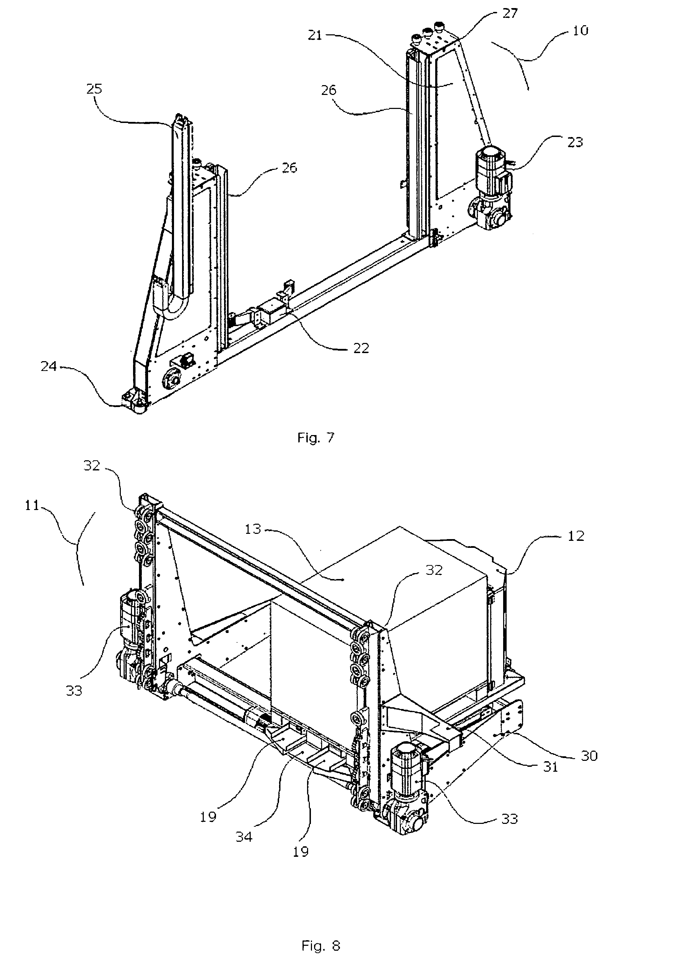

An embodiment of said shuttle 10 is shown in accompanying figure 7. Said shuttle 10 comprises a supporting structure 21 in turn comprising handling means adapted to horizontally translate said shuttle 10, supporting means and housing for said transport device 11 and feeding means for said shuttle 10 and for said transport device 11.

Said handling means comprise at least one electric motor 23 and a plurality of wheels 24, 27 adapted to slide on at least one track, said feeding means comprising a feeding column 25 equipped with connecting means having power cabling and at least one shoegear 22 adapted to feed the system in all positions during the entire work cycle, while said supporting means and housing for said transport device 11 comprise a specific guide 26 integral with said supporting structure 21.

An exemplary embodiment of said transport device 11 is shown in accompanying figure 8. Said transport device 11 comprises a supporting structure 30 in turn comprising handling means adapted to vertically translate said transport device 11, supporting means and housing 34 for said satellite device 12 and feeding means.

Said handling means comprise at least one electric motor 33 and a plurality of wheels 32 adapted to slide on at least one track, said feeding means comprise a mechanical arm 31 adapted to interface with said feeding column 25 while said supporting means and housing 34 for said satellite device 12 comprise at least one guide 19 along which said satellite device 12 is free to move.

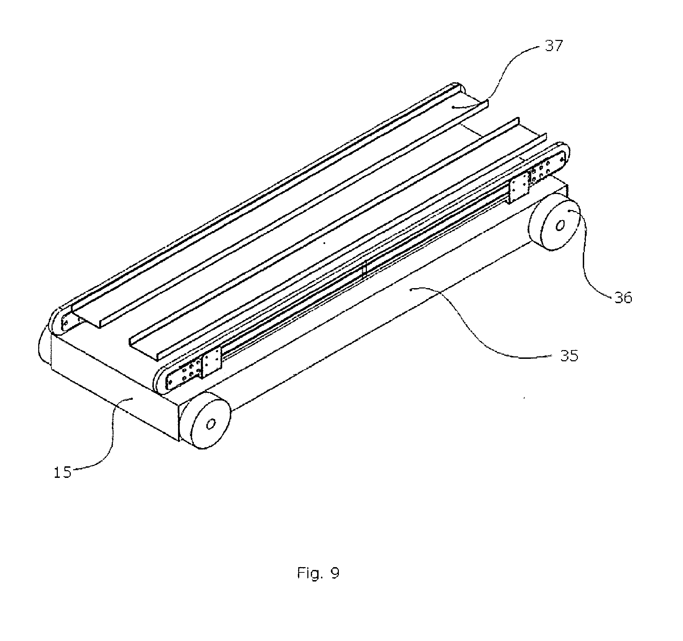

Lastly, with reference to accompanying figure 9, an embodiment of said third semi-moveable device 15 comprises a base frame 35 comprising suitable motorized handling means and comprising a plurality of wheels 36 and at least one guide 37 along which said satellite device 12 is free to move.

## Claims

1. An apparatus for handling goods in warehouses equipped with shelf-like structures comprising: at least a first self-moving device (10) adapted to horizontally translate along a sliding passage on straight tracks along said shelf and comprising at least a second self-moving device (11) adapted to vertically translate on straight tracks along said shelf and comprising in turn at least one picking device (12) adapted to detach from said second self-moving device (11), to be inserted onto the planes of said shelf to reach the pre-established work position so as to pick or unload the selected loading unit (13) and lastly to return to said second self-moving device (11); **characterised in that** it further comprises a third self-moving device (15) adapted to transfer the loading units from the first self-moving device (10) to the material unload station or from the material load station to first self-moving device (10) and further adapted to use the same sliding passage used by said first self-moving device (10), and a guiding equipment comprising said horizontal and vertical tracks adapted to be installed on said shelves or similar warehouse structures allocated to storing the goods and to interface with the self-moving and picking devices (10,11,12) of said apparatus so as to allow then to interact with said warehouse structures for reaching the position of the loading units to be handled.

2. An apparatus according to claim 1, wherein said picking device (12) is chosen from the group comprising: devices equipped with telescopic forks in single and double depth, satellite devices with work front of various measures, picking cam devices.

3. An apparatus according to claims 1-2, wherein said guiding equipment comprises: at least one bottom guide (16) and at least one top guide (17), adapted to interface with said first self-moving device (10); at least one reference guide (18) adapted to allow said second self-moving device (11) to ascend said shelf, at least one sliding guide (19) adapted to interface with said picking device (12), said guides (16, 17, 18, 19) being further adapted to be fixed to the uprights of said shelf.

4. An apparatus according to claim 3, wherein said reference guide (18) comprises a hooking rack.

5. An apparatus according to claims 1-4, wherein said first self-moving device (10) comprises a supporting structure (21) comprising in turn handling means adapted to horizontally translate said first self-moving device (10), supporting and housing means for said second self-moving device (11) and feeding means for said first and second self-moving devices (10,11).

6. An apparatus according to claim 5, wherein said handling means comprise at least one electric motor (23) and a plurality of wheels (24, 27) adapted to slide on at least one track, said feeding means comprise a feeding column (25) equipped with means for the connection to power cables and at least one friction pad (22) adapted to feed said first and second self-moving devices (10, 11) in every position during the entire work cycle, and said supporting and housing means for said second self-moving device (11) comprise a specific guide (26) integral with said supporting structure (21).

7. An apparatus according to claims 1-6, wherein said second self-moving device (11) comprises a supporting structure (30) comprising in turn handling means adapted to vertically translate said second self-moving device (11), supporting and housing means (34) for said picking device (12) and related feeding means.

8. An apparatus according to claim 7, wherein said handling means comprise at least one electric motor (33) and a plurality of wheels (32) adapted to slide on at least one track, said feeding means comprise a mechanical arm (31) adapted to interface with said feeding column (25) while said supporting and housing means (34) for said picking device (12) comprise at least one guide (19) along which said picking device is free to be moved.

9. An apparatus according to claims 1-8, wherein said third self-moving device (15) comprises a base frame (35) comprising suitable motorized handling means and comprising a plurality of wheels (36) and at least one guide (37) along which said picking device (12) is free to be moved.

10. An apparatus according to claims 1-9 comprising a plurality of said first self-moving devices (10), each comprising a second self-moving device (11), or comprising a self-moving device (10) comprising and adapted to control a plurality of said second self-moving devices (11).

## Patentansprüche

1. Vorrichtung zum Handhaben von Waren in Lagerhäusern, die mit regalartigen Aufbauten ausgestattet sind, umfassend: zumindest eine erste selbstbewegende Vorrichtung (10), die zum horizontalen Verschieben entlang eines Gleitdurchgangs auf geraden Bahnen entlang des Regals angepasst ist, und mit zumindest einer zweiten selbstbewegenden Vorrichtung (11), die zum vertikalen Verschieben an geraden Bahnen entlang des Regals angepasst ist, und die ihrerseits zumindest eine Aufnahmevorrichtung (12) umfasst, die zum Ablösen von der zweiten selbstbewegenden Vorrichtung (11) angepasst ist, um an die Ebenen des Regals eingesetzt zu werden, um die vorher eingestellte Arbeitsposition zu erreichen, um so die gewählte Beladeeinheit (13) aufzunehmen oder zu entladen, und um zuletzt zu der zweiten selbstbewegenden Vorrichtung (11) zurückzukehren;
**dadurch gekennzeichnet, dass**
sie ferner eine dritte selbstbewegende Vorrichtung (15), die zum Übertragen der Beladungseinheiten von der ersten selbstbewegenden Vorrichtung (10) an die Materialentladestation oder von der Materialladestation zu der ersten selbstbewegenden Vorrichtung (10) angepasst ist, und ferner zum Verwenden desselben Gleitdurchgangs angepasst ist, der von der ersten selbstbewegenden Vorrichtung (10) verwendet wird, und eine Führungsausstattung umfasst, die die horizontalen und vertikalen Bahnen umfasst und zur Installation an den Regalen oder ähnlichen Lagerhausaufbauten, die zum Lagern der Waren zugeordnet sind, und zum Koppeln mit den selbstbewegenden und Aufnahmevorrichtungen (10, 11, 12) der Vorrichtung angepasst ist, um so zu ermöglichen, dass diese mit den Lagerhausaufbauten wechselwirken können, um das Erreichen der Position der Beladungseinheiten handzuhaben.

2. Vorrichtung nach Anspruch 1,
wobei die Aufnahmevorrichtung (12) aus der Gruppe gewählt ist, die umfasst: Vorrichtungen, die mit Teleskopgabeln in einzelner und doppelter Tiefe ausgestattet sind, Satellitenvorrichtungen mit einer Arbeitsfront für verschiedene Maßnahmen, Aufnahmenockenvorrichtungen.

3. Vorrichtung nach einem der Ansprüche 1 bis 2,
wobei die Führungsausstattung umfasst: zumindest eine untere Führung (16) und zumindest eine obere Führung (17), die zum Koppeln mit der ersten selbstbewegenden Vorrichtung (10) angepasst ist; zumindest eine Referenzführung (18), die derart angepasst ist, um zu ermöglichen, dass die zweite selbstbewegende Vorrichtung (11) das Regal hinauffahren kann, zumindest eine Gleitführung (19), die zum Koppeln mit der Aufnahmevorrichtung (12) angepasst ist, wobei die Führungen (16, 17, 18, 19) ferner derart angepasst sind, dass sie an den Ständern des Regals fixiert werden können.

4. Vorrichtung nach Anspruch 3,
wobei die Referenzführung (18) ein Hakengestell umfasst.

5. Vorrichtung nach einem der Ansprüche 1 bis 4,
wobei die erste selbstbewegende Vorrichtung (10) einen Trägeraufbau (21), der seinerseits ein Handhabungsmittel umfasst, das zum horizontalen Verschieben der ersten selbstbewegenden Vorrichtung (10) angepasst ist, ein Träger- und Unterbringungsmittel für die zweite selbstbewegende Vorrichtung (11) und ein Zufuhrmittel für die ersten und zweiten selbstbewegenden Vorrichtungen (10, 11) umfasst.

6. Vorrichtung nach Anspruch 5,
wobei das Handhabungsmittel zumindest einen Elektromotor (23) und eine Mehrzahl von Rädern (24, 27) umfasst, die zum Gleiten an zumindest einer Bahn angepasst sind, wobei das Zufuhrmittel eine Zufuhrsäule (25), die mit einem Mittel zur Verbindung mit Stromkabeln ausgestattet ist, und zumindest einen Reibbelag (22) umfasst, der derart angepasst ist, die ersten und zweiten selbstbewegenden Vorrichtungen (10, 11) in jede Position während des gesamten Arbeitszyklus zuzuführen, und wobei das Träger- und Unterbringungsmittel für die zweite selbstbewegende Vorrichtung (11) eine spezifische Führung (26) einteilig mit dem Trägeraufbau (21) umfasst.

7. Vorrichtung nach einem der Ansprüche 1 bis 6,
wobei die zweite selbstbewegende Vorrichtung (11) einen Trägeraufbau (30) umfasst, der seinerseits ein Handhabungsmittel, das zum vertikalen Verschieben der zweiten selbstbewegenden Vorrichtung (11) angepasst ist, ein Träger- und Unterbringungsmittel (34) für die Aufnahmevorrichtung (12) und ein zugeordnetes Zufuhrmittel umfasst.

8. Vorrichtung nach Anspruch 7,
wobei das Handhabungsmittel zumindest einen Elektromotor (33) und eine Mehrzahl von Rädern (32) umfasst, die zum Gleiten an der zumindest einen Bahn angepasst sind, wobei das Zufuhrmittel einen mechanischen Arm (31) umfasst, der zum Koppeln mit der Zufuhrsäule (25) angepasst ist, während das Träger- und Unterbringungsmittel (34) für die Aufnahmevorrichtung (12) zumindest eine Führung (19) umfasst, entlang der die Aufnahmevorrichtung frei bewegt werden kann.

9. Vorrichtung nach einem der Ansprüche 1 bis 8,
wobei die dritte selbstbewegende Vorrichtung (15) einen Basisrahmen (35) umfasst, der ein geeignetes motorisiertes Handhabungsmittel umfasst und eine Mehrzahl von Rädern (36) und zumindest eine Führung (37) umfasst, entlang der sich die Aufnahmevorrichtung (12) frei bewegen kann.

10. Vorrichtung nach einem der Ansprüche 1 bis 9,
mit einer Mehrzahl der ersten selbstbewegenden Vorrichtungen (10), von denen jede eine zweite selbstbewegende Vorrichtung (11) umfasst, oder mit einer selbstbewegenden Vorrichtung (10), die eine Mehrzahl der zweiten selbstbewegenden Vorrichtungen (11) umfasst und zum Steuern einer Mehrzahl der zweiten selbstbewegenden Vorrichtungen (11) angepasst ist.

## Revendications

1. Appareil pour manipuler des marchandises dans des entrepôts équipés de structures en forme de rayon, comprenant : au moins un premier dispositif automoteur (10) adapté pour se translater horizontalement le long d'un passage coulissant sur des rails droits le long dudit rayon et comprenant au moins un deuxième dispositif automoteur (11) adapté pour se translater verticalement sur des rails droits le long dudit rayon et comprenant à son tour au moins un dispositif de ramassage (12) adapté pour se séparer dudit deuxième dispositif automoteur (11), pour être inséré sur le plan dudit rayon pour atteindre la position de fonctionnement préétablie afin de ramasser ou de décharger l'unité de chargement sélectionnée (13) et enfin pour retourner audit deuxième dispositif automoteur (11) ; **caractérisé en ce qu'**il comprend en outre un troisième dispositif automoteur (15) adapté pour transférer les unités de chargement du premier dispositif automoteur (10) au poste de déchargement de matériau ou du poste de chargement de matériau au premier dispositif automoteur (10) et en outre adapté pour utiliser le même passage coulissant utilisé par ledit premier dispositif automoteur (10), et un équipement de guidage, comprenant lesdits rails horizontaux et verticaux, adapté pour être installé sur lesdits rayons ou structures d'entrepôt similaires attribués au stockage des marchandises et pour réaliser une interface avec les dispositifs automoteurs et de ramassage (10, 11, 12) dudit appareil afin de leur permettre de présenter une interaction avec lesdites structures d'entrepôt pour atteindre la position des unités de chargement destinées à être manipulées.

2. Appareil selon la revendication 1, dans lequel ledit dispositif de ramassage (12) est choisi parmi le groupe comprenant : des dispositifs équipés de fourches télescopiques dans une profondeur simple et double, des dispositifs satellites avec un avant de fonctionnement de diverses mesure, des dispositifs à came de ramassage.

3. Appareil selon les revendication 1 à 2, dans lequel ledit équipement de guidage comprend : au moins un guidage inférieur (16) et au moins un guidage supérieur (17), adaptés pour réaliser une interface avec ledit premier dispositif automoteur (10) ; au moins un guidage de référence (18) adapté pour permettre audit deuxième dispositif automoteur (11) de monter sur ledit rayon, au moins un guidage coulissant (19) adapté pour réaliser une interface avec ledit dispositif de ramassage (12), lesdits guidages (16, 17, 18, 19) étant en outre adaptés pour être fixés aux montants dudit rayon.

4. Appareil selon la revendication 3, dans lequel ledit guidage de référence (18) comprend un râtelier d'accrochage.

5. Appareil selon les revendication 1 à 4, dans lequel ledit premier dispositif automoteur (10) comprend une structure de support (21) comprenant à son tour des moyens de manipulation adaptés pour translater horizontalement ledit premier dispositif automoteur (10), des moyens de support et de logement pour ledit deuxième dispositif automoteur (11) et des moyens d'alimentation pour lesdits premier et deuxième dispositif automoteurs (10, 11).

6. Appareil selon la revendication 5, dans lequel lesdits moyens de manipulation comprennent au moins un moteur électrique (23) et une pluralité de roues (24, 27) adaptées pour coulisser sur au moins un rail, lesdits moyens d'alimentation comprennent une colonne d'alimentation (25) équipée de moyens pour la connexion à des câbles électriques et au moins un patin à frottement (22) adapté pour alimenter lesdits premier et deuxième dispositif automoteurs (10, 11) dans chaque position durant le cycle de fonctionnement entier, et lesdits moyens de support et de logement pour ledit deuxième dispositif automoteur (11) comprennent un guidage spécifique (26) intégré à ladite structure de support (21).

7. Appareil selon les revendication 1 à 6, dans lequel ledit deuxième dispositif automoteur (11) comprend une structure de support (30) comprenant à son tour des moyens de manipulation adaptés pour translater verticalement ledit deuxième dispositif automoteur (11), des moyens de support et de logement (34) pour ledit dispositif de ramassage (12) et des moyens d'alimentation connexes.

8. Appareil selon la revendication 7, dans lequel lesdits moyens de manipulation comprennent au moins un moteur électrique (33) et une pluralité de roues (32) adaptées pour coulisser sur au moins un rail, lesdits moyens d'alimentation comprennent un bras mécanique (31) adapté pour réaliser une interface avec ladite colonne d'alimentation (25) alors que lesdits moyens de support et de logement (34) pour ledit dispositif de ramassage (12) comprennent au moins un guidage (19) le long duquel ledit dispositif de ramassage est libre d'être déplacé.

9. Appareil selon les revendications 1 à 8, dans lequel ledit troisième dispositif automoteur (15) comprend un cadre de base (35) comprenant des moyens de manipulation motorisés appropriés et comprenant une pluralité de roues (36) et au moins un guidage (37) le long duquel ledit dispositif de ramassage (12) est libre d'être déplacé.

10. Appareil selon les revendications 1 à 9 comprenant une pluralité desdits premiers dispositifs automoteurs (10), chacun comprenant un deuxième dispositif automoteur (11), ou comprenant un dispositif automoteur (10) comprenant et adapté pour commander une pluralité desdits deuxièmes dispositifs automoteurs (11).
